(19) Europäisches Patentamt / European Patent Office / Office européen des brevets

(11) **EP 2 914 009 B1**

(12) **EUROPEAN PATENT SPECIFICATION**

(45) Date of publication and mention
of the grant of the patent:
**13.12.2017 Bulletin 2017/50**

(21) Application number: **15150405.7**

(22) Date of filing: **08.01.2015**

(51) Int Cl.:
*H04N 19/105* (2014.01)  *H04N 19/119* (2014.01)
*H04N 19/172* (2014.01)  *H04N 19/593* (2014.01)
*H04N 19/112* (2014.01)  *H04N 19/127* (2014.01)
*H04N 19/146* (2014.01)  *H04N 19/167* (2014.01)
*H04N 21/24* (2011.01)  *H04N 21/845* (2011.01)
*G06F 3/14* (2006.01)

(54) **Information processing device, method, program, and terminal device**

Informationsverarbeitungsvorrichtung, Verfahren, Programm und Endgerät

Dispositif de traitement d'informations, procédé, programme et dispositif terminal

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.02.2014 JP 2014023048**

(43) Date of publication of application:
**02.09.2015 Bulletin 2015/36**

(73) Proprietor: **FUJITSU LIMITED
Kawasaki-shi,
Kanagawa 211-8588 (JP)**

(72) Inventors:
• **Yamasaki, Koichi**
  **Kawasaki-shi, Kanagawa 211-8588 (JP)**
• **Matsui, Kazuki**
  **Kawasaki-shi, Kanagawa 211-8588 (JP)**

(74) Representative: **Fenlon, Christine Lesley
Haseltine Lake LLP
Lincoln House, 5th Floor
300 High Holborn
London WC1V 7JH (GB)**

(56) References cited:
**EP-A1- 2 387 203    US-A1- 2013 300 633**

# EP 2 914 009 B1

**Description**

The embodiments discussed herein are related to an information processing device that generates an image for displaying execution results of a computer on a display unit of a terminal device connected via a network and transmits the image to the network, a method, a program, and a terminal device.

In recent years, from the viewpoint of security and Business Continuity Plan (BCP), the use of thin clients has been expanding. Thin client refers to a system architecture in which a client terminal that a user uses is caused to perform minimum processing, and the rest of the processing is concentrated on the side of a server device and the server device is caused to perform the rest of the processing, or refers to a dedicated client terminal device whose functions have been narrowed, which is used in such an architecture.

Accompanying the spread of smart phones and tablets and the speeding up of mobile network, the need for the mobile thin client used by a mobile terminal to securely connect to an in-house system has increased.

In the case where the thin client is used by using a mobile network, there is a problem wherein it is difficult to use the thin client comfortably due to factors such as a change in Network Bandwidth and Round Trip Time(RTT) .

Conventionally, in order to solve a problem such as this, a fast screen transfer technique for improving operability by transmitting as a still image a region in which an updating of a screen is not performed frequently and as a moving image a region in which an updating is performed frequently so as to reduce the amount of data when the thin client is used is known (e.g., a technique described in Patent document 1). In this conventional technique, a change frequency determination unit divides an image stored in an image memory into a plurality of regions and determines the frequency of a change between frames for each region. A first image transmission unit transmits an image of a region in which there has been a change. A high-frequency change region identification unit identifies a region whose change frequency has exceeded a threshold value as a high-frequency update region. A transmission stop unit stops the transmission of the identified region by the first image transmission unit. A second image transmission unit transmits the image of the identified region after performing compression processing for a moving image whose compression ratio is higher than that of the first image transmission unit.

Patent document 1: Japanese Laid-open Patent Publication No. 2011-238014

One embodiment of an aspect aims at improvement in operability by making it possible to reduce the time from the operation of a user until an updating starts at a client terminal.

The invention is defined in the independent claims. Optional embodiments are set out in the dependent claims. The invention is described, by way of example only, with reference to the following drawings, in which:

FIG. 1 is a block diagram of a first embodiment;
FIG. 2A is an explanatory diagram of a screen division method in the first embodiment;
FIG. 2B is an explanatory diagram of a screen division method in the first embodiment;
FIG. 2C is an explanatory diagram of a screen division method in the first embodiment;
FIG. 3 is an explanatory diagram of a transmission method of a still-image update region in the first embodiment;
FIG. 4A is an explanatory diagram of a transmission method of a moving image update region in the first embodiment;
FIG. 4B is an explanatory diagram of a transmission method of a moving image update region in the first embodiment;
FIG. 5 is a flowchart illustrating a processing example in the case where a general server computer device performs each function of a server as software processing in the first embodiment;
FIG. 6 is a flowchart illustrating transmission processing of a moving image update region in the first embodiment;
FIG. 7A is a diagram illustrating a specific processing example of the present embodiment in the case where only a moving image update region 701 exists within a virtual desktop screen;
FIG. 7B is a diagram illustrating a specific processing example of the present embodiment in the case where only a moving image update region 701 exists within a virtual desktop screen;
FIG. 8 is a block diagram of a second embodiment;
FIG. 9 is a diagram illustrating an index example of the order of priority;
FIG. 10 is a flowchart illustrating an example of update region preference processing;
FIG. 11A is a flowchart illustrating an example of transmission timing determination processing;
FIG. 11B is a flowchart illustrating an example of transmission timing determination processing;
FIG. 12 is a flowchart illustrating a processing example in the case where a general server computer device performs each function of the server as software processing in the second embodiment;
FIG. 13 is a flowchart illustrating transmission processing of a moving image update region in the second embodiment;
FIG. 14 is a flowchart illustrating transmission processing of a still-image update region in the second embodiment;
FIG. 15A is a diagram illustrating a specific operation example of the second embodiment in the case where a moving image update region and a still-image update region are intermingled;
FIG. 15B is a diagram illustrating a specific operation example of the second embodiment in the case where a moving image update region and a still-image update region are intermingled;

FIG. 16A is a diagram illustrating a specific operation example of the second embodiment in the case where there is a plurality of moving image regions;

FIG. 16B is a diagram illustrating a specific operation example of the second embodiment in the case where there is a plurality of moving image regions;

FIG. 17 is a diagram illustrating a specific operation example of the second embodiment in the case where the network band has changed;

FIG. 18 is a diagram illustrating a specific operation example of the second embodiment in the case where a new moving image region has been detected;

FIG. 19 is a diagram illustrating a specific operation example of the second embodiment in the case where the update region size is changed; and

FIG. 20 is a diagram illustrating an example of a hardware configuration of a computer that can implement the system of the first or second embodiment as software processing.

## DESCRIPTION OF EMBODIMENTS

Hereinafter, embodiments for embodying the present embodiments will be explained in detail with reference to the drawings.

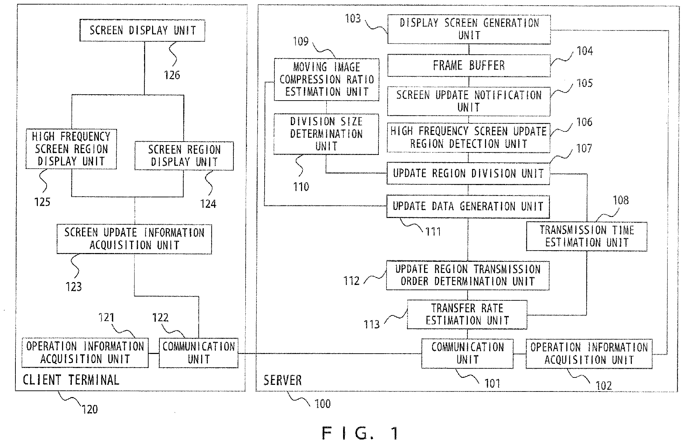

FIG. 1 is a block diagram of a first embodiment.

A client terminal 120 operates as a thin client terminal for a server 100.

The client terminal 120 includes an operation information acquisition unit 121, a communication unit 122, a screen update information acquisition unit 123, a screen region display unit 124, a high-frequency screen region display unit 125, and a screen display unit 126.

The server 100 includes a communication unit 101, an operation information acquisition unit 102, a display screen generation unit 103, a frame buffer 104, a screen update notification unit 105, a high-frequency screen update region detection unit 106, an update region division unit 107, and a transmission time estimation unit 108. The server 100 further includes a moving image compression ratio estimation unit 109, a division size determination unit 110, an update data generation unit 111, an update region transmission order determination unit 112, and a transfer rate estimation unit 113.

First, in the client terminal 120, the operation information acquisition unit 121 acquires a key input or a mouse operation by a user who operates the client terminal 120 and notifies the communication unit 122 of that as operation information.

Upon receipt of screen update information of the server 100, the communication unit 122 gives the data to the screen update information acquisition unit 123, and sets the reception time to an Ack (Acknowledgement) response indicating an acknowledgement and returns the response to the server 100. Further, upon receipt of the operation information acquired by the operation information acquisition unit 121, the communication unit 122 transmits the operation information to the server 100.

The screen update information acquisition unit 123 acquires update data of the server screen and allocates the update data of the server screen to the high-frequency screen region display unit 125 in the case where the update data is update data of a high-frequency screen region or allocates the update data to the screen region display unit 124 in the case where the update data is update data of regions other than a high-frequency screen region.

The screen region display unit 124 decodes the update data (data of a still-image update region) acquired from the screen update information acquisition unit 123 and writes the update data in the screen data region.

The high-frequency screen region display unit 125 decodes the update data (data of a moving image update region) acquired from the screen update information acquisition unit 123 and writes the update data in the screen data region.

The screen display unit 126 performs drawing of an image on a screen by writing the screen data region in which the update data has been writes in an image drawing memory of a graphics processing unit (GPU).

Next, in the server 100, upon receipt of the operation information in the client terminal 120, the communication unit 101 give the operation information to the operation information acquisition unit 102 and upon receipt of the server screen update data from the transfer rate estimation unit 113, the communication unit 101 transmits the data to the client terminal 120.

The operation information acquisition unit 102 decodes the operation information reported by the communication unit 101 and performs the operation.

The display screen generation unit 103 generates display screen data including an image drawn by an application etc. in response to the operation that was performed by the operation information acquisition unit 102 and writes the display screen data to the frame buffer 104.

The frame buffer 104 performs display processing when the display screen data is written by the display screen generation unit 103.

The screen update notification unit 105 detects an update region in the case where the frame buffer 101 is written and notifies the high-frequency screen update region detection unit 106 of the update region.

When the update region is notified by the screen update notification unit 105, the high-frequency screen update region detection unit 106 sets the update region as a high-frequency screen update region in the case where the number of times of successive updating of the update region is equal to or greater than a threshold value.

The update region division unit 107 notifies the transmission time estimation unit 108 of the region size of the high-frequency screen update region and the region size of the other update regions on the basis of the detection results of the high-frequency screen update region detection unit 106 and acquires the transmission time of each update region from the transmission time estimation unit 108. The update region division unit 107 notifies the division size determination unit 110 of the acquired transmission time of each update region and acquires the division size of the high-frequency screen update region and the division size of the other update regions, respectively, from the division size determination unit 110. The update region division unit 107 divides the high-frequency screen update region and the other update regions by the acquired division sizes, respectively, and notifies the update region transmission order determination unit 112 of the divided update regions.

Upon receipt of the update region size from the update region division unit 107, the transmission time estimation unit 108 acquires the network band from the transfer rate estimation unit 113, estimates the transmission time, and notifies the update region division unit 107 of the transmission time.

The moving image compression ratio estimation unit 109 acquires the update region size and the compressed moving image size from the update data generation unit 111, and estimates the compression ratio for each of an I-frame and a P-frame by taking into consideration the past compression ratio and notifies the division size determination unit 110 of the compression ratios.

Here, in the compression of a moving image, the whole of the moving image region is compressed in the first frame (intra-frame compression). In the subsequent frames, compression is performed by also making use of information on the previous frame (inter-frame compression). The size of data that is compressed by the intra-frame compression will be substantially the same as the size of the data that is compressed by still image compression. The frame data compressed by the intra-frame compression is called the I (Intra-coded frame) frame and the frame data compressed by the inter-frame compression is called the P (Predicted) frame. The compression of moving image data is irreversible compression, and therefore, by periodically performing the intra-frame compression (I-frame) of the moving data, the difference between the compressed data and the original data is inhibited from gradually increasing.

When the transmission time of the update region is reported by the update region division unit 107, the division size determination unit 110 acquires the moving image compression ratio of each of the I-frame and the P-frame from the moving image compression ratio estimation unit 109, determines the division size, and notifies the update region division unit 107 of the division size in the case where the update region is a moving image update region. On the other hand, in the case where the update region is a still-image update region, the division size determination unit 110 determines the division size of the update region so that the transmission time is equal to or less than a threshold value if the reported transmission time exceeds the threshold value.

The update data generation unit 111 encodes each divided update region of the high-frequency screen update region and the other update regions that were divided in accordance with necessity in the update region division unit 107. In the case where the update region is a moving image region, the update data generation unit 111 notifies the moving image compression ratio estimation unit 109 of the region size before the encoding and of the data size after the encoding.

The update region transmission order determination unit 112 determines the transmission order on the basis of the index of the order of priority for each update region and notifies the transfer rate estimation unit 113 of the update region data in the determined order.

The transfer rate estimation unit 113 sets the transmission start time, the transmission data size, etc., for estimating the transfer rate to the header etc. of the transmission data of the update data reported by the update region transmission order determination unit 112 and notifies the communication unit 101 thereof. The transfer rate estimation unit 113 estimates the transfer rate from the reception time that is set when the Ack response is received from the client terminal 120, and the transmission start time and the transmission data size set at the time of transmission.

The above operation of the first embodiment is explained in detail below.

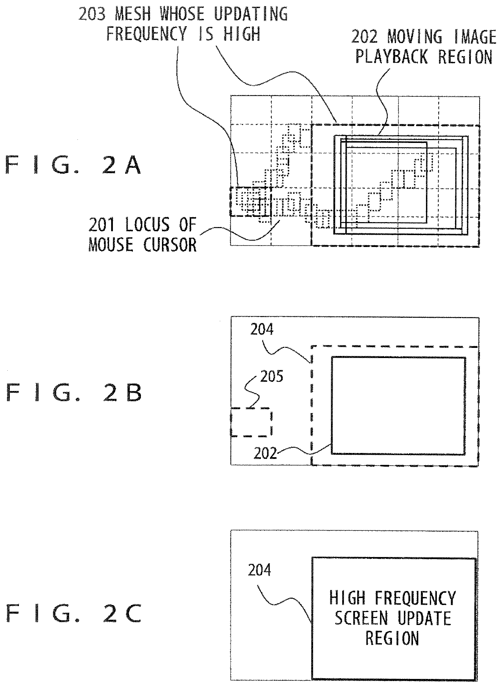

FIG. 2 is an explanatory diagram of a screen division method in the first embodiment.

In the present embodiment, the screen update notification unit 105 and the high-frequency screen update region detection unit 106 of the server 100 perform processing by dividing the desktop screen that is stored in the frame buffer 104 into, for example, $8 \times 8$ meshes, as illustrated in FIG. 2A.

The screen update notification unit 105 collects information on squares that are updated on the desktop screen divided into meshes as in FIG. 2A and acquires meshes whose update frequency in a fixed time is higher than a threshold value. For example, in the case where a mouse cursor moves as indicated by 201 on the desktop screen as illustrated in FIG. 2A, or in the case where a region 202 in which a moving image is being played back exists, the screen update notification unit 105 performs the operation as follows. The screen update notification unit 105 extracts a mesh region 203 in which the update frequency of pixel data is high between frame images that are updated on the frame buffer 104 and notifies the high-frequency screen update region detection unit 106 of the mesh region 203.

The high-frequency screen update region detection unit 106 estimates screen regions 204 and 205 that have been changed as illustrated in FIG. 2B by combining a plurality of mesh regions reported by the screen update notification unit 105. The high-frequency screen update region detection unit 106 counts the number of times of updating of the estimated update regions 204 and 205 and sets the update region as a high-frequency screen update region in the case where the number of times of updating exceeds a threshold value set in advance. In the present embodiment, the high-frequency screen update region is determined to be a moving image region (or region that should be turned into a moving image) and the other update regions are determined to be still image regions. For example, the update region 204 in FIG. 2 is determined to be a moving image region including the moving image playback region 202 and the update region 205 is determined to be a still image region.

In the case where the high-frequency screen update region detection unit 106 has determined the update region of the screen to be a still image region other than the high-frequency screen update region, the update region division unit 107 notifies the transmission time estimation unit 108 of the update region size of the still image. Upon receipt of the update region size, the transmission time estimation unit 108 acquires the network band from the transfer rate estimation unit 113, estimates the transmission time, and notifies the update region division unit 107 of the transmission time of the still-image update region. The update region division unit 107 notifies the division size determination unit 110 of the acquired transmission time of the still-image update region. The division size determination unit 110 determines the division size of the still-image update region so that the transmission time is equal to or less than a threshold value in the case where the reported transmission time exceeds the set threshold value and notifies the update region division unit 107 of the division size.

The update data generation unit 111 encodes the divided update region of the still-image update region that has been divided in the update region division unit 107 in accordance with necessity. The still-image update region that has been encoded in this manner is transmitted to the client terminal 120 from the update region transmission order determination unit 112 and the transfer rate estimation unit 113 via the communication unit 101.

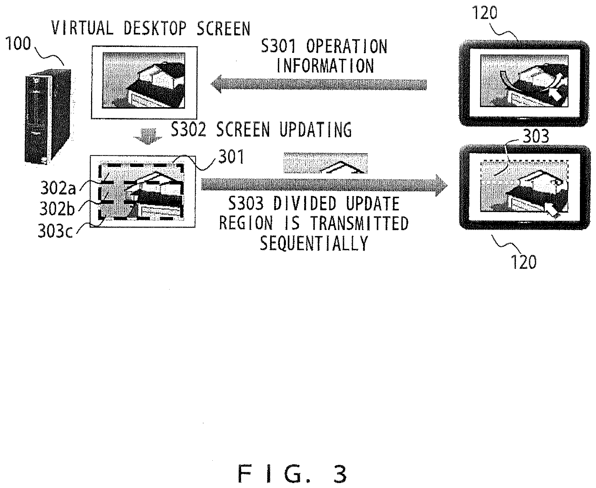

FIG. 3 is an explanatory diagram of a transmission method of a still-image update region in the present embodiment. Here, for example, it is assumed that operation information is transmitted from the client terminal 120 to the server 100 (step S301 in FIG. 3), and as a result of this, the desktop screen of the frame buffer 104 of the server 100 (hereinafter, this screen is described as a "virtual desktop screen") is updated (step S302 in FIG. 3), and an update region 301 is detected. Here, the division size determination unit 110 divides the update region 301 into three regions, for example, into divided update regions 302a, 302b, and 302c, on the basis of the transmission time estimated by the transmission time estimation unit 108. As a result of this, the update data generation unit 111 sequentially transmits the divided update regions 302a, 302b, and 302c obtained by dividing the update regions 301 (step S303 in FIG. 3). In the client terminal 120, the communication unit 122 and the screen update information acquisition unit 123 receive data of the divided update region and give the data to the screen region display unit 124. First, the screen region display unit 124 divides and displays the divided update region 302a as illustrated by 303 in FIG. 3. Similarly, the screen region display unit 124 sequentially divides and displays the other divided update regions 302b and 302c upon receipt of them.

In this manner, in the case of the present embodiment, for the update region of a still image, the client terminal 120 sequentially displays the divided update regions in the order of reception, and therefore, the time from the operation until a display is produced is reduced and a user can feel that the response is quick.

Next, the case is explained where the high-frequency screen update region detection unit 106 has determined the update region of the screen to be a moving image update region (high-frequency screen update region).

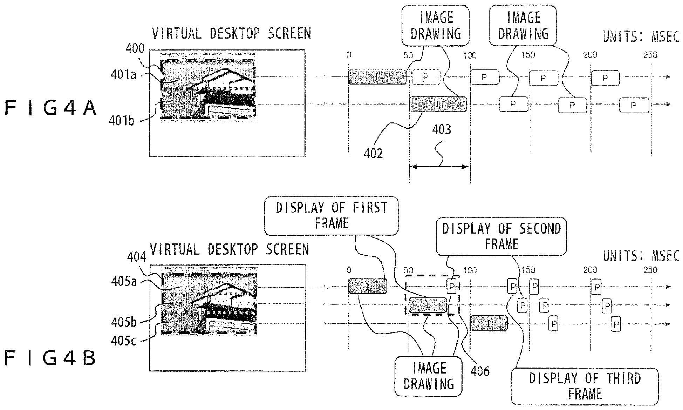

FIG. 4 is an explanatory diagram of a transmission method of a moving image update region in the present embodiment.

First, as in the case of the still-image update region, the case is considered where the moving image update region is transmitted by simply dividing the moving image update region on the basis of the transmission time in accordance with necessity. FIG. 4A is a diagram illustrating an example of the transmission operation of the moving image update region when a case such as this is supposed. Here, it is assumed that, for example, 50 milliseconds (msec) per transmission is secured by taking into consideration the transmission time. Then, it is also assumed that two divided update regions 401a and 401b obtained by dividing a moving image update region 400 on the virtual desktop screen are transmitted sequentially. In this case, the first frame of the moving image is the I-frame and if the moving image region is divided so that the I-frame is transmitted within a time set in advance, for example 50 msec, a problem such as the following will occur. First, at a timing of 0 to 50 msec in FIG. 4A, the I-frame corresponding to the divided update region 401a of the moving image is transmitted. Following this, at a timing of 50 to 100 msec in FIG. 4A, the I-frame corresponding to the divided update region 401b of the moving image is transmitted. However, while the I-frame of the second divided update region 401b is being transmitted, as illustrated as 402 in FIG. 4, other than the divided update region 401b of the I-frame being transmitted, it is not possible to transmit the P-frame corresponding to the divided update region 401a. Consequently, during the period illustrated by 403 in FIG. 4A, the moving image is not updated in the client terminal 120 and a user feels that the operation is delayed. This becomes more remarkable as the number of divided update regions increases. Further, as described previously, the I-frame is transmitted periodically, and therefore, operability deteriorates periodically.

Because of this, in the present embodiment, in the case where the update region is a moving image, the division size determination unit 110 acquires the moving image compression ratio of each of the I-frame and the P-frame from the moving image compression ratio estimation unit 109 when the transmission time of the moving image update region is reported by the update region division unit 107. Next, the division size determination unit 110 estimates the data amount of the I-frame transmission of the moving image update region from the average compression ratio of the I-frame. Likewise, the division size determination unit 110 estimates the data amount of the P-frame transmission of the moving image update region from the average compression ratio of the P-frame. Then, from the estimated data amounts and transmission time of the I-frame or P-frame transmission, the division size determination unit 110 determines the number of divisions of the update region and the division size so that both the I-frame and the P-frame can be transmitted and notifies the update region division unit 107 of the number of divisions and the division size. The update region division unit 107 divides the I-frame and the P-frame of the moving image update region in the intermingled state by the reported division size and transmits the divided I-frame and P-frame to the client terminal 120 after compressing them as a moving image.

FIG. 4B is a diagram illustrating an example of the transmission operation of the moving image update region according to the present embodiment and here, as in the case of FIG. 4A, it is assumed that 50 msec per transmission is secured by taking the transmission time into consideration. Then, it is also assumed that three divided update regions 405a, 405b, and 405c, which are obtained by dividing a moving image update region 404 on the virtual desktop screen into three, are transmitted sequentially. In this case, first, at a timing of 0 to 50 msec in FIG. 4B, the I-frame corresponding to the divided moving image update region 405a is transmitted. Following this, at a timing of 50 to 100 msec in FIG. 4B, the I-frame corresponding to the divided moving image update region 405b is transmitted, and at the same time, the second P-frame corresponding to the divided moving image update region 405a is also transmitted. Further, at a timing of 100 to 150 msec in FIG. 4B, the I-frame corresponding to the divided moving image update region 405c is transmitted. At the same time, the third P-frame corresponding to the divided moving image update region 405a and the second P-frame corresponding to the divided moving image update region 405b are also transmitted.

In this manner, in the present embodiment, it is possible to transmit the P-frame of another divided region while the I-frame is being transmitted. Because of this, it is made possible for a user to feel that the display of a moving image in the update region 404 is smooth.

As above, both in the case where the update region is a moving image and in the case where the update region is a still image, in the present embodiment, it is possible for the client terminal 120 to receive the data of the divided region earlier than the moving image data or still image data corresponding to one frame when the network band is narrow. Because of this, it is possible for a user of the client terminal 120 to feel that the time from the operation until an image is drawn is higher than before, and therefore, it is made possible to improve operability.

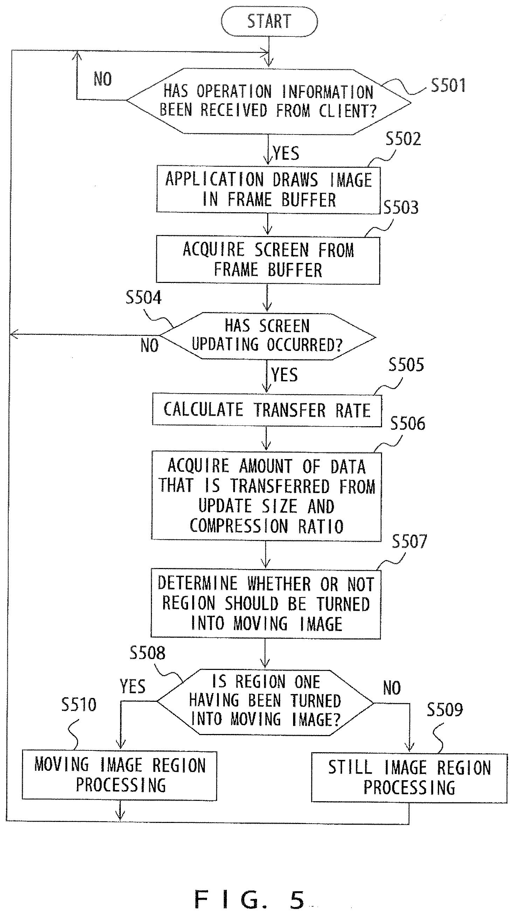

FIG. 5 is a flowchart illustrating a processing example in the case where a general server computer device performs each function of the server 100 illustrated in the block diagram in FIG. 1 according to the first embodiment as software processing. The processing of the flowchart is processing in which the CPU (Central Processing Unit) of the server computer device executes the virtual desktop control program stored in the memory.

First, the standby state continues until operation information is received from the client terminal 120 (processing is repeated while the results of the determination at step S501 are NO).

When the operation information is received from the client terminal 120 and the results of the determination at step S501 change to YES, the application program on the server 100, which is specified to be executed by the client terminal 120, stores image information in the frame buffer 104 (step S502). The server 100 performs the operation of the application on the virtual desktop screen that is displayed on the display of the client terminal 120 in such a manner that it seems that a user is operating the desktop screen of the Windows system of the local terminal. The information on this operation is transmitted to the server 100 from client terminal 120. As a result of that, the application program is executed on the server 100 and when rewriting the display of the virtual desktop screen is needed as a result of that, the application program updates the display of the virtual desktop screen region within the frame buffer 104. The processing that is performed at step S501 corresponds to the functioning of the display screen generation unit 103 in FIG. 1.

Next, the screen data of the virtual desktop screen is acquired from the frame buffer 104 (step S503), and whether or not an updating of the screen has occurred is determined (step S504). The processing that is performed at step S503 and step S504 corresponds to the functioning of the screen update notification unit 105 in FIG. 1.

In the case where an updating of the screen has not occurred and the results of the determination at step S504 are NO, the processing returns to the standby processing at step S501.

In the case where an updating of the screen has occurred and the results of the determination at step S504 are YES, the network band on which the server 100 is communicating is acquired and the data transfer rate is calculated (step S505).

Next, the amount of data that is transferred is acquired on the basis of the size of the update region of the screen and the compression ratio of the screen data (step S506).

The above-described processing that is performed at step S505 and step S504 corresponds to the functioning of the transmission time estimation unit 108 in FIG. 1.

Next, processing to determine whether or not the update region of the screen is a moving image region, or whether or not the update region of the screen is a high-frequency screen update region that should be turned into a moving image, is performed (step 5507), and whether or not the update region is a region that has been turned into a moving image (high-frequency screen update region) is determined (stepS508). The processing that is performed at step S507 and step S508 corresponds to the functioning of the high-frequency screen update region detection unit 106.

In the case where the update region is not a region that has been turned into a moving image and the results of the determination at step S508 are NO, the still image region processing described previously by using FIG. 3 is performed (step S509). On the other hand, in the case where the update region is the region that has been turned into a moving image and the results of the determination at step S508 are YES, the moving image region processing described previously by using FIG. 4B is performed (step S510). The processing at step S509 or step S510 corresponds to the functioning of the update region division unit 107, the division size determination unit 110, and the update data generation unit 111.

After the processing at step S509 or step S510, the processing returns to the standby processing at step S501.

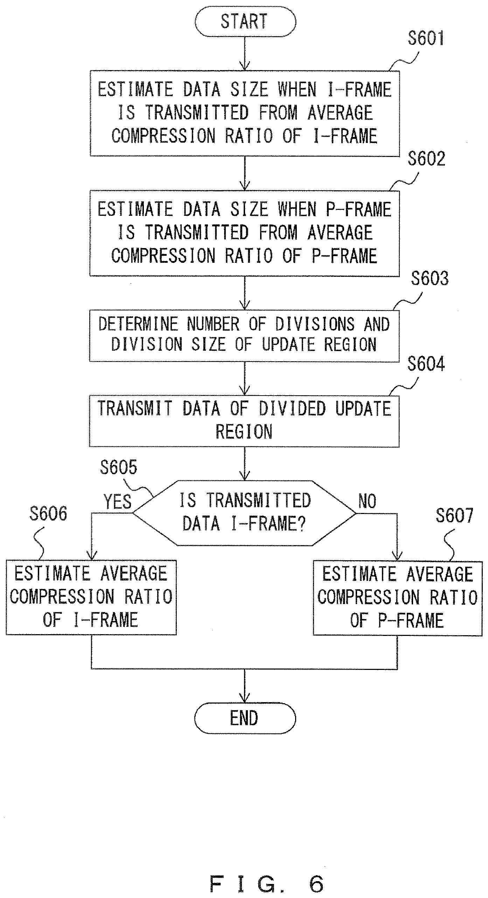

FIG. 6 is a flowchart illustrating the transmission processing of the moving image update region that is performed at step S510 in FIG. 5.

First, from the average compression ratio of the I-frame calculated in the processing at step S606, to be described later, at the transmission timing of the previous moving image update region, the data size when the I-frame is transmitted is estimated (step S601).

Next, from the average compression ratio of the P-frame calculated in the processing at step S607, to be described later, at the transmission timing of the previous moving image update region, the data size when the P-frame is transmitted is estimated (step S601).

Then, from the data amounts of the I-frame transmission or P-frame transmission that have been estimated at step S601 and step S602 are transferred and from the transmission time, the number of divisions of the update region and the division size are determine so that both the I-frame and the P-frame can be transmitted (step S603).

The processing at steps S601 to S603 described above corresponds to the functioning of the division size determination unit 110 in FIG. 1.

After that, the data of the divided update region is divided by the division size determined at step S603 and is transmitted to the client terminal 120 after being compressed as a moving image (step S604). This processing corresponds to the functioning of the update region division unit 107 and the update data generation unit 111 in FIG. 1 described previously by using FIG. 4B.

After that, whether or not the transmitted data is the I-frame is determined (step S605).

In the case where the transmitted data is the I-frame and the results of the determination at step S605 are YES, the average compression ratio of the transmitted I-frame is estimated (step S606). The average compression ratio of the I-frame that is estimated here is referred to in the previously described processing at step S601 at the transmission timing of the next frame of the moving image update region.

In the case where the transmitted data is not the I-frame and the results of the determination at step S605 are NO, the average compression ratio of the transmitted P-frame is estimated (step S607). The average compression ratio of the P-frame estimated here is referred to in the previously described processing at step S602 at the transmission timing of the next frame of the moving image update region.

The processing at step S606 and step S607 described above corresponds to the functioning of the moving image compression ratio estimation unit 109 in FIG. 1.

After the processing at step S606 or step S607, the processing of the flowchart in FIG. 6 is terminated and the moving image region processing at step S510 in FIG. 5 is terminated.

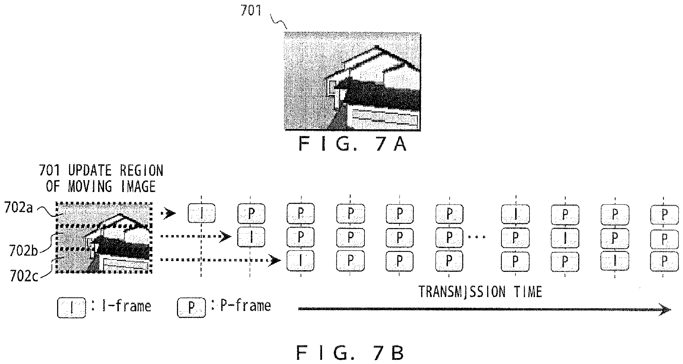

FIG. 7 is a diagram illustrating a specific processing example of the first embodiment in the case where only a moving image update region 701 exists within the virtual desktop screen.

First, in this processing example, it is assumed that the screen size of the update region represented as 701 in FIG. 7A has been calculated as, for example, 1,024 × 768 pixels by the functioning of the high-frequency screen update region detection unit 106 in FIG. 1 or by the processing at step S504 in FIG. 5. Further, it is also assumed that the compression ratio of the I-frame has been calculated as 5% and that of the P-frame as 1% by the functioning of the moving image compression ratio estimation unit 109 in FIG. 1 or the processing at step S606 and step S607 in FIG. 6. Furthermore, it is also assumed that the network band has been estimated as 5 Mbps (= 5, 000 kbps (kilobit/sec)) by the functioning of the transfer rate estimation unit 113 in FIG. 1 or the processing at step S505 in FIG. Still furthermore, it is also assumed that the transfer time threshold value is 100 msec.

By the functioning of the division size determination unit 110 in FIG. 1 described previously or by the processing at step S603 in FIG. 6, the number of divisions is determined so that the transfer time is equal to or less than the transfer time threshold value.

Data size of the update region (when not compressed): 3 MB (megabyte)
Data size of the I-frame (estimated value): 150 kB (kilobyte)
Data size of the P-frame (estimated value): 15 kB (kilobyte)

If the number of divisions is taken to be n, the data amount per transfer is 1/n at the maximum for the I-frame a (n-1) / n at the maximum for the P-frame, and then, the transfer time that is equal to or less than 100 msec, which is the transfer time threshold value, is found. Here, "kbit" means "kilobit".

$$((150 \times 8) \; [kbit] \div n + (15 \times 8) \; [kbit] \times (n-1) \div n) \div$$
$$5,000 \; [kbps] \leq 0.1 \; [sec]$$

By the above-described calculation expression, $n \geq 2.84$ is found, and therefore, the number of divisions is calculated as three. Consequently, the update region 701 is divided into three regions as illustrated in FIG. 7B and the transmission timing of each piece of moving image data of divided update regions 702a, 702b, and 702c will be the respective timings indicated by arrows extending in the rightward direction from each divided update region. As will be understood from FIG. 7B, in the present embodiment, it is made possible to transmit the I-frames and the P-frames of the moving images of a plurality of divided update regions in the intermingled state at one transmission timing. More specifically, each piece of data that is intermingled with another is transmitted from the server 100 to the client terminal 120 over the Internet or a local area network in the state of being stored in each of a plurality of pieces of packet data that is transmitted in the intermingled state within one transmission period. At this time, for example, in the payload part of each piece of packet data, information for identifying whether the data is the I-frame or the P-frame, which divided update region the data belongs to, and at which timing an image is drawn, and the image drawing data corresponding to the information, are stored. Due to this, in the case where the network band is narrow, it is possible for the client terminal 120 to receive the divided region data earlier than the moving image data corresponding to one frame. Because of this, it is possible for a user to feel that the time that is needed from the operation until an image is drawn is higher than before, and therefore, it is made possible to improve operability.

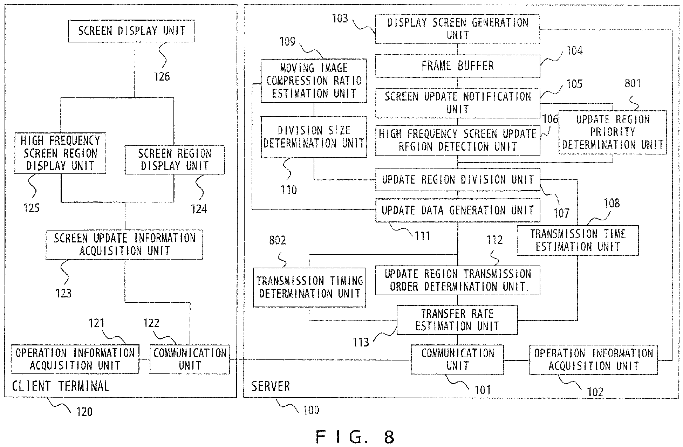

FIG. 8 is a block diagram of a second embodiment.

In the case where there is a plurality of update regions explained in the first embodiment or in the case where the moving image update region has been changed, setting the order of priority and changing the transmission timing are needed when transmitting the update region from the server to the client terminal. As the case where there is a plurality of update regions, the following cases are assumed as representative cases.

- The moving image update region and the still-image update region are intermingled.
- A plurality of moving image update regions exists.
- A moving image update region is detected newly.

In order to implement control processing in these cases, in the configuration of the server 100 illustrated in FIG. 8 according to the second embodiment, an update region priority determination unit 801 and a transmission timing determination unit 802 are added to the configuration of the server 100 in FIG. 1 according to the first embodiment.

The update region priority determination unit 801 determines the transmission priority of the update region on the basis of the order of priority of the update region detected by the screen update notification unit 105 and the index set in advance, such as the index of the order of priority, and notifies the update region division unit 107 of the transmission priority of the update region.

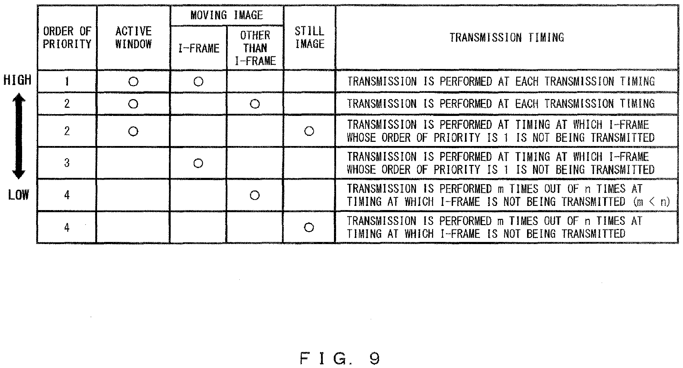

FIG. 9 is a diagram illustrating an index example of the order of priority that is referred to by the update region priority determination unit 801. The order of priority of each update region is determined on the basis of the set index of the order of priority determined in advance.

As parameters that are used as the set indexes, whether or not the window in which the update region is displayed on the virtual desktop screen is an active window, the update region size, whether the update region is a moving image update region or a still-image update region, etc., are used.

In the index example of the order of priority illustrated in FIG. 9, the order of priority is the highest at the time of the transmission of the update region within the active window and at the time of the transmission of the I-frame of a moving image, and the order of priority is the lowest at the time of the transmission of the update region data of a still image within the non-active window.

In the case where there is a plurality of update regions having the same order of priority as the results of referring to the index example of the order of priority illustrated in FIG. 9, the update region priority determination unit 801 determines the order of priority on the basis of the distance to an update region having a higher order of priority or on the basis of the size of the update region.

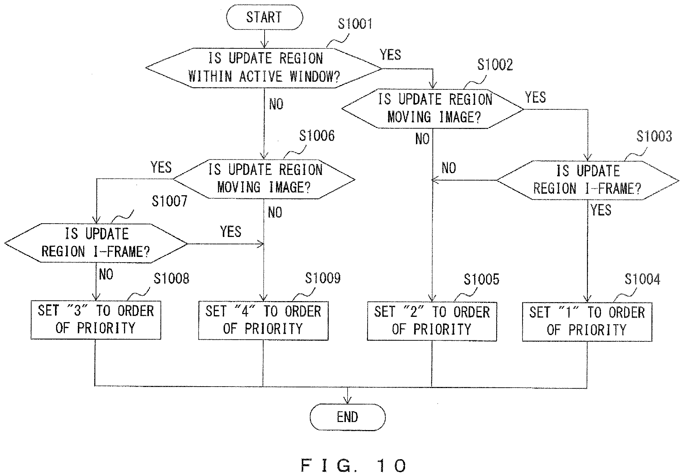

FIG. 10 is a flowchart illustrating an example of processing in which the server 100 performs the functioning of the update region priority determination unit 801 that operates in accordance with the index example of the order of priority in FIG. 9 as update region preference processing by a program.

First, whether or not the update region is within the active window is determined (step S1001).

In the case where the update region is within the active window and the results of the determination at step S1001 are YES, whether or not the update region is a moving image is determined next (step S1002).

In the case where the update region is a moving image and the results of the determination at step S1002 are YES, whether or not the update region is the I-frame is determined further (step S1003).

In the case where the update region is the I-frame and the results of the determination at step S1003 are YES, "1" is set to the order of priority (step S1004). In the case where "1" is set to the order of priority, transmission is performed at each transmission timing as illustrated in FIG. 9.

In the case where the update region is the P-frame of a moving image, not the I-frame, and the results of the determination at step S1003 are NO, "2" is set to the order of priority (step S1005). In the case where the update region is within the active window and the results of the determination at step S1001 are YES, and the update region is not a moving image and the results of the determination at step S1002 are NO, i.e., in the case of a still image within the active window, "2" is also set to the order of priority (step S1005). In the case where "2" is set to the order of priority, as in the case where the order of priority is "1", transmission is performed at each transmission timing as illustrated in FIG. 9.

In the case where the update region is not within the active window and the results of the determination at step S1001 are NO, whether or not the update region is a moving image is determined next (step S1006).

In the case where the update region is a moving image and the results of the determination at step S1006 are YES, whether or not the update region is the I-frame is determined further (step S1007).

In the case where the update region is the 1-frame and the results of the determination at step S1007 are YES, "3" is set to the order of priority (step S1008). In the case where "3" is set to the order of priority, transmission is performed at a timing at which the I-frame whose order of priority is 1 is not being transmitted, as illustrated in FIG. 9.

In the case where the update region is not the I-frame but the P-frame of a moving image and the results of the determination at step S1007 are NO, "4" is set to the order of priority (step S1009). In the case where the update region is not within the active window and the results of the determination at step S1001 are NO, and the update region is not a moving image and the results of the determination at step S1006 are NO, i.e., in the case of a still image within the non-active window, "4" is also set to the order of priority (step S1009). In the case where "4" is set to the order of priority, transmission is performed m times out of n times ($m<n$) when the I-frame is not being transmitted.

As described above, the functioning of the update region priority determination unit 801 that operates in accordance with the index example of the order of priority in FIG. 9 is performed as program processing.

Next, the transmission timing determination unit 802 in FIG. 8 determines the transmission timing of the update region data on the basis of the size of the encoded data that has been generated in the update data generation unit 111 and the transfer rate that has been estimated by the transfer rate estimation unit 113, and notifies the update region transmission order determination unit 112 of the transmission timing.

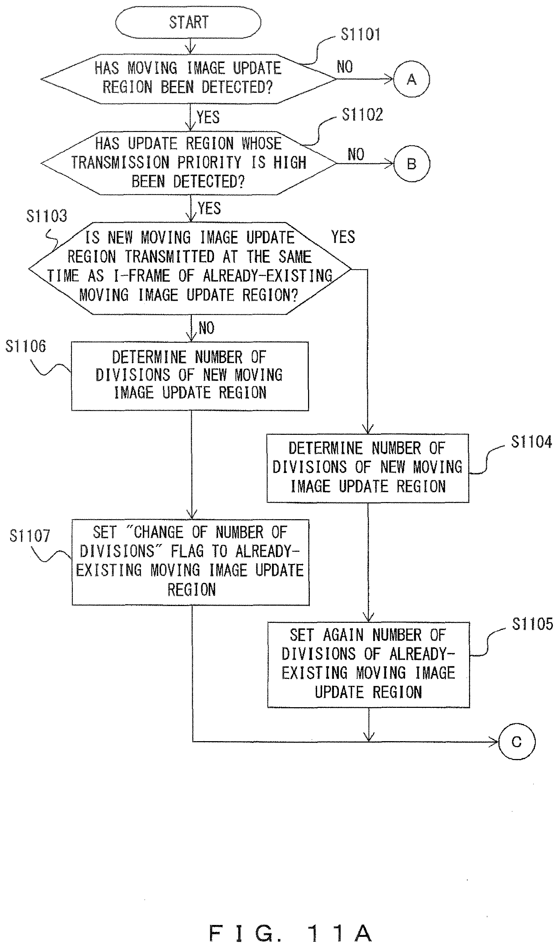

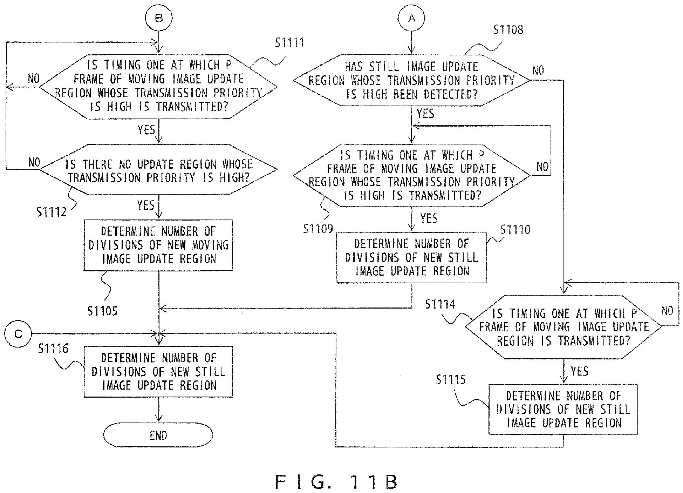

FIG. 11A and 11B are flowchart illustrating an example of processing in which the server 100 performs the functioning of the transmission timing determination unit 802 as transmission timing determination processing by a program.

First, whether or not a moving image update region has been detected is determined (step S1101).

In the case where a moving image update region has been detected and the results of the determination at step S1101 are YES, whether or not a moving image update region whose transmission priority is high has been detected is determined in the update region priority determination processing illustrated in the flowchart in FIG. 10 (step S1102).

In the case where a moving image update region whose transmission priority is high has been detected and the results of the determination at step S1102 are YES, the control operation as follows is performed.

First, whether or not the transmission timing of the update region of a new moving image detected at the timing of this time overlaps that of the I-frame of the update region of the already-existing moving image is determined (step S1103).

In the case where the results of the determination at step S1103 are YES, first, the number of divisions of the update region of the new moving image is determined (step S1104). Following this, the number of divisions of the update region of the already-existing moving image is set again (step S1105). After that, the divided update region that is transmitted at the current timing is determined (step S1116). Here, each divided update region is determined so that the data of the divided update region of the new moving image and the data of the divided update region of the already-existing moving image can be transmitted at the same time. After that, the transmission timing determination processing is terminated.

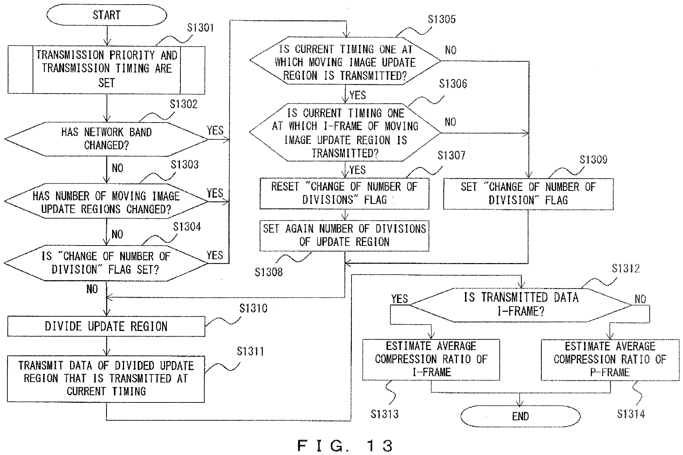

On the other hand, in the case where the transmission timing of the update region of the new moving image does not overlap that of the I-frame of the update region of the already-existing moving image and the results of the determination at step S1103 are NO, first, the number of divisions of the update region of the new moving image is determined (step S1106). Following this, the flag "change in number of divisions" is set to the control region in the memory corresponding to the update region of the already-existing moving image (step S1107). After that, the divided update region that is transmitted at the current timing is determined (step S1116). Here, each divided update region is determined so that the divided update region of the new moving image is transmitted at the same time as the P-frame of the divided update region of the already-existing moving image. After that, the transmission timing determination processing is terminated. For the update region of the already-existing moving image, the number of divisions of the update region is set again at the time of the transmission of the I-frame of the update region of the already-existing moving image in the transmission processing of the moving image update region, to be described later (see steps S1306 to S1308 in FIG. 13, to be described later). As the threshold value of the transmission time used to set the number of divisions at this time, a value in proportion to the size of each moving image update region is set.

Next, in the case where the update region of a still image or the update region of a moving image whose transmission priority is not high has been detected in the update region priority determination processing illustrated in the flowchart in FIG. 10, the control operation as follows is performed. In the following explanation, the update region in this case is described as another update region.

After the moving image update region has not been detected and the results of the determination at step S1101 have changed to NO, whether or not the update region of a still image whose transmission priority is high has been detected is determined (step S1108).

In the case where the update region of a still image whose transmission priority is high has been detected and the results of the determination at step S1108 are YES, the transmission timing is adjusted as follows. The standby state continues until the current timing changes to the timing at which the P-frame of the moving image update region (or divided update region) whose transmission priority is high is transmitted (processing is repeated while the results of the determination at step S1109 are NO). In the case where the current timing has changed to the timing at which the P-frame of the moving image update region (or divided update region) whose transmission priority is high is transmitted and the results of the determination at step S1109 have changed to YES, the number of divisions of the update region of the new still image is determined (step S1110). After that, the divided update region (the update region itself if the number of divisions is 1) that is transmitted at the current timing is determined (step S1116). Here, in the case where there are moving image update regions (or divided update regions) or still-image update regions (or divided update regions) whose timing is the same and whose transmission priority is low, each divided update region is determined so that the data of another update region is transmitted before that of those update regions (or divided update regions). Also in the case where the still-image update region whose transmission priority is high, which is another update region, is divided and transmitted, each divided update region is determined so that the transmission of all the still image divided update regions is completed first. After that, the transmission timing determination processing is terminated.

In the case where the moving image update region has been detected and the results of the determination at step S1101 described previously have changed to YES, and further, the update region is the moving image update region whose transmission priority is low and the results of the determination at step S1102 have changed to NO, the transmission timing is adjusted as follows. The standby state continues until the current timing changes to the timing at which the P-frame of the moving image update region (or divided update region) whose transmission priority is high is transmitted (processing is repeated while the results of the determination at step S1111 are NO). Even in the case where the P-frame has been detected and the results of the determination at step S1111 have changed to YES, whether or not there is another update region whose transmission priority is high is determined, and if there is such an update region, the standby state continues until the timing at which the P-frame is transmitted is also reached for another update region (the results of the determination at step S1112 are NO). When the timing at which the P-frame is transmitted is reached for all the update regions whose transmission priority is high (the results of the determination at step S1112 are YES), the number of divisions of the new moving image update region is determined (step S1113). After that, the divided update region (the update region itself if the number of divisions is 1) that is transmitted at the current timing is determined (step S1116). Here, in the case where there are still-image update regions (or divided update regions) whose timing is the same and whose transmission priority is low, each divided update region is determined so that the data of another update region is transmitted before that of those update regions (or divided update regions). After that, the transmission timing determination processing is terminated.

In the case where the results of the determination at step S1101 and that at step S1108 described previously have changed to NO and another update region is the still-image update region whose transmission priority is low, the transmission timing is adjusted as follows. The standby state continues until the current timing changes to the timing at which the P-frame of the moving image update region (or divided update region) is transmitted (processing is repeated while the results of the determination at step S1114 are NO). The transmission priority of the P-frame may be high or low. In the case where the current timing has changed to the timing at which the P-frame of the moving image update region (or divided update region) is transmitted and the results of the determination at step S1114 have changed to YES, the number of divisions of the new still-image update region is determined (step S1115). After that, the divided update region (the update region itself if the number of divisions is 1) that is transmitted at the current timing is determined (step S1116). Here, even in the case where the transmission priority of the moving image update region is low, at the time of the transmission of the I-frame of the update region, the results of the determination at step S1114 will change to NO, and therefore, the data of the still-image update region whose transmission priority is low, which is another update region, is not transmitted. At the time of the transmission of the P-frame of the moving image update region, in the case where the still-image update region whose transmission priority is low and that is another update region can be transmitted at the same time as the transmission thereof, each divided update region is determined so that the transmission is performed. In the case where the still-image update region whose transmission priority is low and that is another update region will not be transmitted at the same time as the transmission of the moving image of the P-frame, each divided update region is determined so that the P-frame of the moving image update region and the still-image update region whose transmission priority is low and that is another update region are transmitted alternately.

Due to the functions of the update region priority determination unit 801 and the transmission timing determination unit 802 described above, or the update region priority determination processing in FIG. 10 or the transmission timing determination processing in FIG. 11, the second embodiment has the following effects. Even in the case where there is a plurality of update regions or where the moving image region has been changed, it is made possible to transmit the I-frames and the P-frames of the moving images of a plurality of divided update regions and the still images in the intermingled state at one timing. Because of this, in the case where the network band is narrow, it is possible for the client terminal 120 to receive the data of the divided region earlier than before. It is possible for a user of the client terminal 120 to feel that the time from the operation until an image is drawn is shorter than before, and therefore, it is made possible to improve operability.

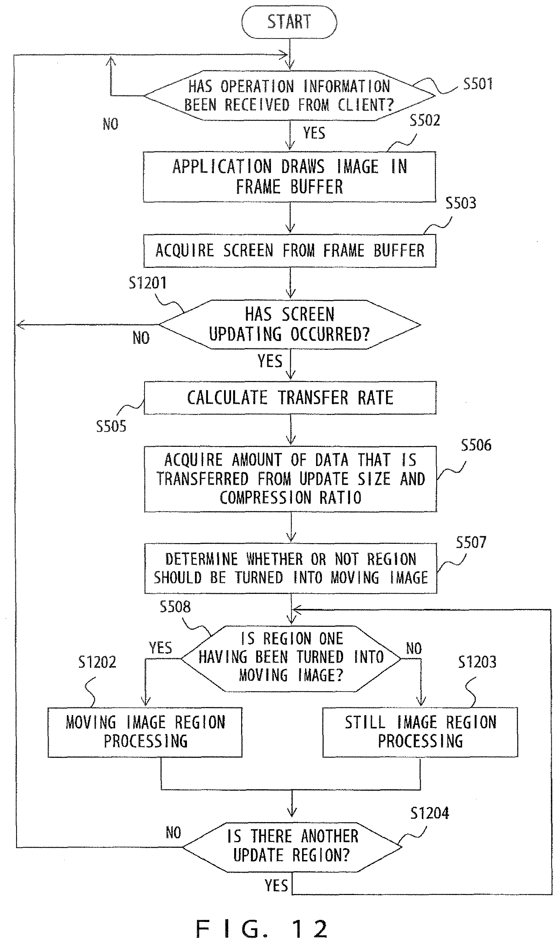

FIG. 12 is a flowchart illustrating a processing example in the case where a general server computer device performs each function of the server 100 illustrated in the block diagram in FIG. 8 according to the second embodiment as software processing. The processing of the flowchart is processing in which the CPU (Central Processing Unit) of the server computer device performs the virtual desktop control program stored in the memory as in the case of the flowchart in FIG. 5.

In FIG. 12, to the steps in which the same processing as that in FIG. 5 is performed, the same step numbers are attached. The configuration in FIG. 12 differs from the configuration in FIG. 5 in the following points. First, whether or not there is a plurality of update regions is determined when whether or not a screen updating has occurred is determined at step S1201 (corresponding to step S504 in FIG. 5). Then, as long as it is determined that there is another update region at step S1204, then the processing at step S508, and the moving image region processing at step S1202 and the still image region processing at step S1203, both step S1202 and step S1203 being branched from step S508, are performed repeatedly for each update region.

By this control processing, even in the case where there is a plurality of update regions or where the moving image region has been changed, it is made possible to transmit the I-frames and the P-frames of the moving images of a plurality of divided update regions and the still images in the intermingled state at one timing.

FIG. 13 is a flowchart illustrating an example of the transmission processing of the moving image update region at step S1202 in FIG. 12.

First, the update region priority determination processing in FIG. 10 described previously and the transmission timing determination processing in FIG. 11 described previously are performed, and thereby, the transmission priority and the transmission timing are set (step S1301).

After that, whether or not the network band has changed (step S1302), whether or not the number of moving image update regions has changed (step S1303), and whether or not the "change in number of divisions" flag has been set (step S1304) are determined sequentially.

In the case where the results of any one of the determinations are YES, the number of divisions of the update region is set again as follows.

First, whether or not the current timing is the output timing of the moving image update region (step S1305) and whether or not the update region is the update region of the I-frame in the case where the update region is the moving image update region (step S1306) are determined.

In the case where the update region currently being subjected to the processing is the I-frame of the moving image and the results of the determinations at step S1305 and step S1306 are YES, the number of divisions of the update region is set again (step S1308) after the "change in number of division" flag is reset (step S1307).

After the processing at this step S1308 or after the results of all the determinations at step S1302, S1303, and S1304 have changed to NO, the division processing of the update region is performed (step S1310). Here, the I-frame and the P-frame of the moving image update region are divided so that the transmission timing of each divided update region explained in the transmission timing determination processing in FIG. 11 is fulfilled.

Then, the data of the divided update region that has been generated at step S1310 and that is transmitted at the current timing is transmitted to the client terminal 120 after being compressed as a moving image (step S1311).

After that, whether or not the transmitted data is the I-frame is determined (step S1312).

In the case where the transmitted data is the I-frame and the results of the determination at step S1312 are YES, the average compression ratio of the transmitted I-frame is estimated (step S1313).

In the case where the transmitted data is not the I-frame and the results of the determination at step S1312 are NO, the average compression ratio of the transmitted P-frame is estimated (step S1314).

After the processing at step S1313 or step S1314, the processing of the flowchart in FIG. 13 is terminated and the moving image region processing at step S1202 in FIG. 12 is terminated.

In the case where the current timing is not the output timing of the moving image update region and the results of the determination at step S1305 are NO, or in the case where the current moving image update region is not the I-frame and the results of the determination at step S1306 are NO, the following control processing is performed. The "change in number of divisions" flag is set so that the results of the determination at step S1304 will be YES at the next timing and steps S1305 to S1308 will be performed again (step S1309). After that, the processing proceeds to the processing at step S1310.

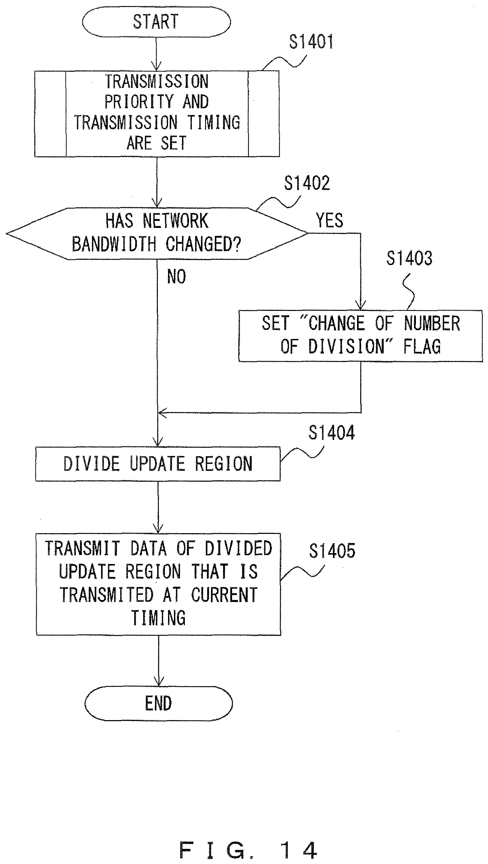

FIG. 14 is a flowchart illustrating an example of the transmission processing of the still-image update region at step S1203 in FIG. 12.

First, the update region priority determination processing in FIG. 10 described previously and the transmission timing determination processing in FIG. 11 described previously are performed, and thereby the transmission priority and the transmission timing are set (step S1401).

After that, whether or not the network band has changed is determined (step S1402).

In the case where the network band has changed and the results of the determination at step S1402 are YES, the "change in number of divisions" flag is set (step S1403). As a result of this, at the timing at which the processing of the next moving image update region is performed, the following processing is performed. The number of divisions of the update region is set again at step S1308 because the results of the determination at step S1304 in FIG. 13 described previously have changed to YES, and further, the results of the determinations at steps S1305 and S1306 have changed to YES at the timing of the I-frame of the moving image update region.

After the processing at step S1403 or after the results of the determination at step S1402 have changed to NO, the division processing of the update region is performed (step S1404). Here, the still-image update region is divided so that the transmission timing of each divided update region explained in the transmission timing determination processing in FIG. 11 is fulfilled.

Then, the data of the divided update region that has been generated at step S1404 and is transmitted at the current timing is transmitted to the client terminal 120 after being compressed as a still image (step S1405). After that, the processing of the flowchart in FIG. 14 is terminated and the still image region processing at step S1203 in FIG. 12 is terminated.

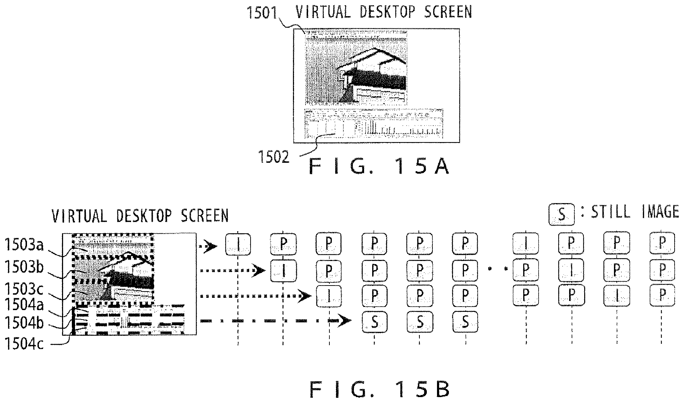

FIG. 15 is a diagram illustrating a specific operation example of the second embodiment in the case where a moving image update region 1501 and a still-image update region 1502 are intermingled as illustrated in FIG. 15A. Each of divided still-image update regions 1504a, 1504b, and 1504c corresponding to the still-image update region 1502 is transmitted at the time of the transmission of each of divided moving image update regions 1503a, 1503b, and 1503c corresponding to the moving image update region 1501.

The assumption about the moving image is the same as that in the case of the first embodiment described previously in FIG. 7, and therefore, the number of divisions is three. Consequently, as illustrated in FIG. 15B, after the moving image update region 1501 is divided into three, the transmission timing of the moving image data of each of the divided moving image update regions 1503a, 1503b, and 1503c will be the timing indicated by each arrow extending in the rightward direction from each divided update region as illustrated in FIG. 15B.

Here, the transmission time of the P-frame of the three divided moving image update regions is calculated as follows.

$$(15 \times 8) \ [\text{kbit}] \div 5,000 \ [\text{kbps}] = 0.024 \ [\text{sec}]$$

The data amount of the still-image update region is assumed to be, for example, 135 [kB] at the time of compression. As a result of this, the transmission time to transmit the data of the still-image update region is calculated as an expression below.

$$(135 \times 8) \ [\text{kbit}] \div 5,000 \ [\text{kbps}] = 0.216 \ [\text{sec}]$$

Consequently, in the case where the still-image update region and the P-frame are transmitted at the same time, transmitting the still image update region in a time period equal to or shorter than the time period that is calculated by an expression below is needed in order to complete transmission in 100 msec or less.

$$0.1\ [sec]\ -\ 0.024\ [sec]\ =\ 0.076\ [sec]$$

As a result of this, it is not possible to transmit the still-image update region in one iteration, and therefore, the still-image update region is also divided. The number of divisions at this time is calculated by an expression below.

$$0.216\ \div\ 0.076\ =\ 2.84$$

By the above-described calculation expression, n≥2. 84 holds, and therefore, the number of divisions is calculated as three. Consequently, as illustrated in FIG. 15B, after the still-image update region 1502 is divided into three, the transmission timing of the still image data of each of the divided still-image update regions 1504a, 1504b, and 1504c can be determined to be a timing indicated by "S" in FIG. 15B.

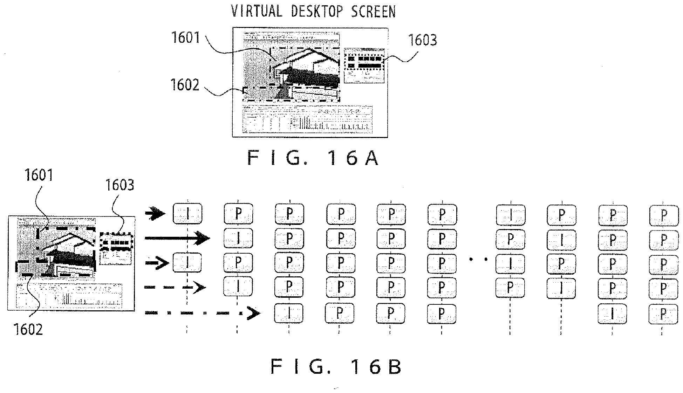

FIG. 16 is a diagram illustrating a specific operation example of the second embodiment in the case where there is a plurality of moving image regions, such as moving image regions 1601, 1602, and 1603, as illustrated in FIG. 16A.

In the case where there is a plurality of moving image update regions, the number of divisions and the transmission timing are determined by the transmission timing determination unit 802 in accordance with the transmission priority determined by the update region priority determination unit 801.

If it is assumed that the priority of the update region 1601 and the update region 1602 is "1" (see FIG. 9), a threshold value of the transmission time of each update region is set in accordance with the size of each update region. In the case where a region size ratio between the update region 1601 and the update region 1602 is, for example, 3 : 2, the threshold values of the transmission time are set to 60 msec and 40 msec, respectively. If the numbers of divisions of the update region 1601 and the update region 1602 are determined in the same manner as that in the case of FIG. 7 in the first embodiment, both of the numbers of division are two. As a result of this, as illustrated in FIG. 16B, two divided update regions of the update region 1601 are transmitted at a division timing indicated by the solid line arrow and two divided update regions of the update region 1602 are transmitted at a division timing indicated by the broken line arrow.

In the case where the data of the update region 1603 is transmitted at the time of the transmission of the P-frames of the update region 1601 and the update region 1602, the threshold value of the transmission time of the update region 1603 at the time of the transmission of the P-frames of the update region 1601 and the update region 1602 is 75.4 msec, and by the same calculation as that in the case of FIG. 7 in the first embodiment, the number of divisions of the update region 1603 is one. As a result of this, as illustrated in FIG. 16B, the update region 1603 is transmitted at a timing indicated by the alternate long and short dashed line.

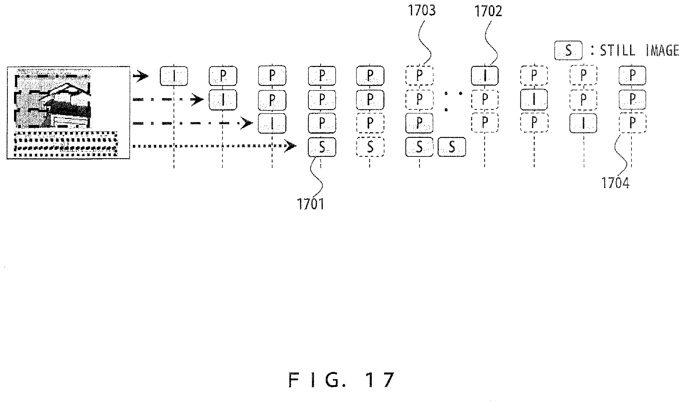

FIG. 17 is a diagram illustrating a specific operation example of the second embodiment in the case where the network band has changed.

For example, in the case where the network band has changed at a timing indicated by 1701 in FIG. 17, the size of the moving image update region is changed at a transmission timing of the I-frame indicated by a timing indicated by 1702 in FIG. 17.

In the case where the network band has so narrowed that all the P-frames of the divided update regions of the update region can no longer be transmitted at the same time, the frame rate decreases even if the moving image update region is changed. However, the moving image update region is changed at the transmission timing of the next I-frame as follows by taking into consideration the transmission time of the I-frame.

It is not possible to transmit all of the P-frames at each transmission timing as indicated by 1703 or 1704 in FIG. 17, and therefore, transmission is performed in the order of the transmission priority of the update region.

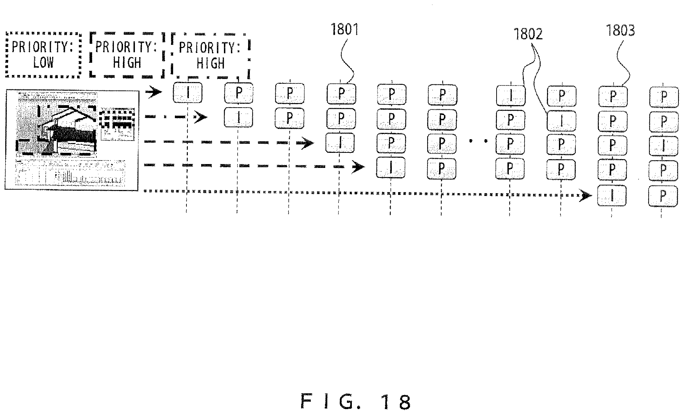

FIG. 18 is a diagram illustrating a specific operation example of the second embodiment in the case where a new moving image region has been detected.

In FIG. 18, in the case where a moving image update region has been further detected at a timing indicated by 1801 or 1803 in the state where there exists a moving image update region, the transmission timing is determined in accordance with the transmission priority of the update region.

Immediately after the detection of a moving image update region whose transmission priority is high, the moving image compression of the new moving image update region is started.

The number of divisions is determined in the same manner as in the case of FIG. 7 in the first embodiment and the threshold value of the transmission time is determined by the ratio between the size of the new moving image update region and the size of the already-existing moving image update region as in the case of FIG. 16.

At the timing at which the I-frame of the already-existing moving image update region is transmitted, for example at a timing indicated by 1802 in FIG. 18, the threshold value of the transmission time is acquired from the size ratio between the moving image update regions and the number of divisions is determined as in the case of FIG. 16 also for the already-existing moving image update region.

In the case where a moving image update region whose transmission priority is low has been detected, as in the case of FIG. 15, at the time of the transmission of the P-frame of the moving image update region whose transmission priority is high, the data of the detected moving image update region is transmitted.

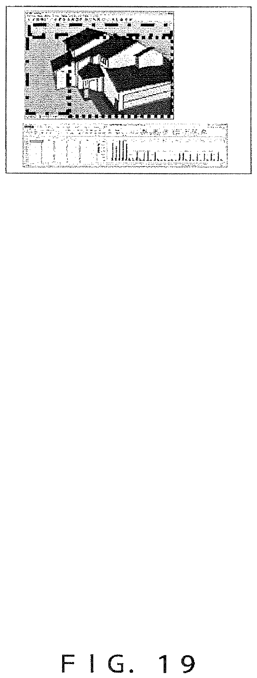

FIG. 19 is a diagram illustrating a specific operation example of the second embodiment in the case where the update region size is changed.

In the case where the size of the update region is changed, the timing at which the size is changed is controlled.

In the case where a new update region is included within the current update region, at the transmission timing of the next I-frame, the new update region is changed into the moving image update region.

In the case where a new update region partially overlaps the current update region, a region that has not yet been changed into the current moving image update region is transmitted as a new moving image update region. The transmission as the new moving image update region is controlled similarly as in the case of FIG. 18. However, in the case where the update region of the already-existing update region has become smaller than the threshold value, the update region is changed immediately without waiting until the next I-frame transmission timing is reached. In the case where the I-frame transmission timing of the already-existing update region partially overlaps the I-frame transmission timing of all the divided update regions in the new update region, the update region is changed immediately without waiting until the next I-frame transmission timing is reached.

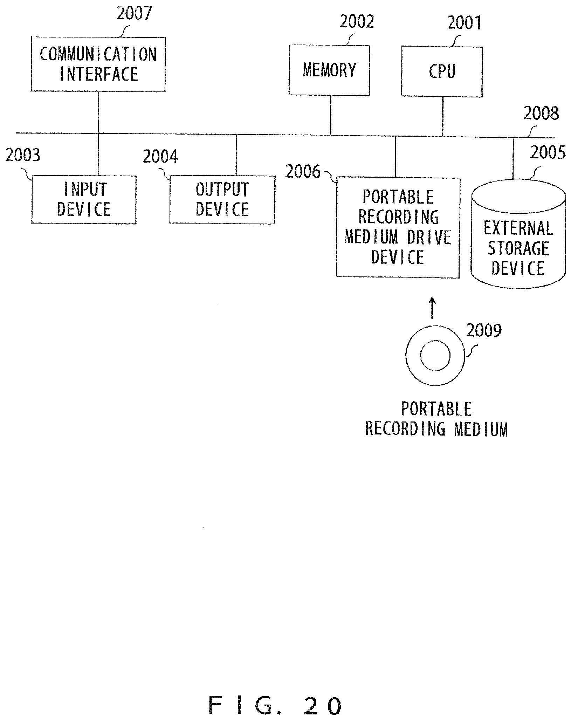

FIG. 20 is a diagram showing an example of a hardware configuration of a computer that can implement the system of the first or second embodiment as software processing.

The computer illustrated in FIG. 20 has a configuration in which a CPU 2001, a memory 2002, an input device 2003, an output device 2004, an external storage device 2005, a portable recording medium drive device 2006 into which a portable recording medium 2009 is inserted, and a communication interface 2007 are provided, and these components are connected to one another via a bus 2008. The configuration illustrated in FIG. 20 is just an example of a computer that can implement the above-described system and the configuration of a computer such as this is not limited to this configuration.

The CPU 2001 controls the whole of the computer. The memory 2002 is a memory, such as a RAM, which temporarily stores a program or data stored in the external storage device 2005 (or the portable recording medium 2009) when the program is executed, or the data is updated, or the like. The CPU 2001 controls the whole of the computer by reading programs from the memory 2002 and executing the programs.

The input device 2003 detects an input operation by a user through a keyboard, a mouse, etc., and notifies the CPU 2001 of the detection results.

The output device 2004 outputs the data that is sent under the control of the CPU 2001 to a display device or a printing device.

The external storage device 2005 is, for example, a hard disk storage device, and is mainly used for saving various kinds of data and programs.

The portable recording medium drive device 2006 receives the portable recording medium 2009, such as an optical disc, an SDRAM, and a CompactFlash (registered trademark), and plays an auxiliary role in the external storage device 2005.

The communication interface 2007 is a device for connecting a communication line, such as, for example, a LAN (Local Area Network) and a WAN (Wide Area Network).

The system having the configuration in FIG. 1 according to the first embodiment or the configuration in FIG. 8 according to the second embodiment is implemented by the CPU 2001 performing the functioning of each processing unit in FIG. 1 or FIG. 8 or executing the programs for performing the processing implemented by the flowchart in FIG. 5, FIG. 6, or FIG. 10 to FIG. 14. The programs may be recorded, for example, on the external storage device 2005 or may be recorded on the portable storage medium 2009, and then the portable storage medium 2009 may be distributed. Alternatively, it may also be possible to enable the network connection device 2007 to acquire the programs via a network.

## Claims

1. An information processing device (100) configured to generate an image for displaying execution results of a computer (100) on a display unit (126) of a terminal device (120) connected via a network and to transmit the image to the network, the information processing device (100) comprising:

an update region extraction unit (105, 106) configured to extract a region, that is updated as a moving image, as a moving image update region from a screen stored in an image memory that holds a screen on which an image of the execution results of the computer (100) is drawn;

a division state determination unit (110,108,109) configured to determine a number of divisions of the moving image update region, so that both an I-frame and a P-frame can be transmitted in the same transmission, from information including a network bandwidth, a threshold value of the transmission time for the transmission set in advance, an average compression ratio of a frame encoded without using an inter-frame prediction, and an average compression ratio of a frame encoded by using the inter-frame prediction, wherein the transmission time for the transmission is shorter than the threshold value;

an update region division unit (107) configured to divide the update region that has been determined to be the moving image region in the determined number of divisions; and

an update region transmission unit (111,112,113) configured to transmit divided update region data to the terminal device (120).

2. The device (100) according to claim 1, wherein
the update region extraction unit (105,106) is further configured to extract a region that is updated as a still image as a still-image update region from the screen stored in the image memory, and
the division state determination unit (110,108,109) is configured to determine a number of divisions of the still-image update region as well as the number of divisions of the moving image update region.

3. The device (100) according to claim 1 or 2, further comprising:

a priority determination unit (801) configured to determine transmission priority of the update region in a case where there is a plurality of update regions, an update region within an active window having a high priority; and
a transmission timing determination unit (802) configured to determine a transmission timing of the divided update region on the basis of the transmission priority, the kind of data that is transmitted, and the network bandwidth, wherein
the update region transmission unit (111,112,113) is configured to transmit the divided update region at the determined transmission timing.

4. An information processing method for generating an image for displaying execution results of a computer (100) on a display unit of a terminal device (120) connected via a network and transmitting the image to the network, the method comprising:

extracting a region, that is updated as a moving image, as a moving image update region from a screen stored in an image memory that holds a screen on which an image of the execution results is drawn;
determining a number of divisions of the moving image update region, so that both an I-frame and a P-frame can be transmitted in the same transmission, from information including a network bandwidth, a threshold value of the transmission time for the transmission set in advance, an average compression ratio of a frame encoded without using an inter-frame prediction, and an average compression ratio of a frame encoded by using the inter-frame prediction, wherein the transmission time for the transmission is shorter than the threshold value;
dividing the update region that has been determined to be the moving image region in the determined number of divisions; and
transmitting divided update region data to the terminal device (120).

5. An information processing program which, when executed on a computer connected to a terminal device (120) through a network, causes the computer (100) to:

extract a region, that is updated as a moving image, as a moving image update region from a screen stored in an image memory that holds a screen on which an image of execution results of the computer (100) is drawn, wherein the computer is configured to generate an image for displaying execution results of the computer (100) on a display unit of the terminal device connected via a network and to transmit the image to the network;
determine a number of divisions of the moving image update region, so that both an I-frame and a P-frame can be transmitted in the same transmission, from information including a network bandwidth, a threshold value of the transmission time for the transmission set in advance, an average compression ratio of a frame encoded without using an inter-frame prediction, and an average compression ratio of a frame encoded by using the inter-frame prediction, wherein the transmission time for the transmission is shorter than the threshold value;
divide the update region that has been determined to be the moving image region in the determined number of divisions; and
transmit divided update region data to the terminal device (120).

**Patentansprüche**

1. Informationsverarbeitungsvorrichtung (100), die dazu ausgelegt ist, ein Bild zum Anzeigen von Ausführungsergebnissen eines Computers (100) auf einer Anzeigeeinheit (126) einer Endgerätevorrichtung (120), die via ein Netzwerk verbunden ist, zu erzeugen und das Bild zum Netzwerk zu übertragen, wobei die Informationsverarbeitungsvorrichtung (100) Folgendes umfasst:

   eine Aktualisierungsregionsextraktionseinheit (105,106), die dazu ausgelegt ist, eine Region, die als ein sich bewegendes Bild aktualisiert wird, von einem Bildschirm, der in einem Bildspeicher gespeichert ist, der einen Bildschirm enthält, auf dem ein Bild der Ausführungsergebnisse des Computers (100) gezeichnet ist, als Aktualisierungsregion für sich bewegende Bilder zu extrahieren;
   eine Unterteilungszustandsbestimmungseinheit (110,108,109), die dazu ausgelegt ist, anhand von Informationen einschließlich einer Netzwerkbandbreite, eines vorab eingestellten Schwellenwertes der Übertragungszeit für die Übertragung, eines durchschnittlichen Komprimierungsverhältnisses eines Frames, der ohne Verwendung einer Interframe-Prädiktion codiert wurde, und eines durchschnittlichen Komprimierungsverhältnisses eines Frames, der unter Verwendung einer Interframe-Prädiktion codiert wurde, eine Anzahl von Unterteilungen der Aktualisierungsregion für sich bewegende Bilder zu bestimmen, derart, dass sowohl ein 1-Frame als auch ein P-Frame bei derselben Übertragung übertragen werden können, wobei die Übertragungszeit für die Übertragung kürzer ist als der Schwellenwert;
   eine Aktualisierungsregionsunterteilungseinheit (107), die dazu ausgelegt ist, die Aktualisierungsregion zu unterteilen, von der bestimmt wurde, dass sie die Region für sich bewegende Bilder in der bestimmten Anzahl von Unterteilungen ist; und
   eine Aktualisierungsregionsübertragungseinheit (111, 112, 113), die dazu ausgelegt ist, die Daten über die unterteilte Aktualisierungsregion zur Endgerätevorrichtung (120) zu übertragen.

2. Vorrichtung (100) nach Anspruch 1, wobei
   die Aktualisierungsregionsextraktionseinheit (105, 106) ferner dazu ausgelegt ist, vom Bildschirm, der im Bildspeicher gespeichert ist, eine Region, die als Standbild aktualisiert wird, als Standbildaktualisierungsregion zu extrahieren, und
   die Unterteilungszustandsbestimmungseinheit (110, 108, 109) dazu ausgelegt ist, eine Anzahl Unterteilungen der Standbildaktualisierungsregion sowie die Anzahl Unterteilungen der Aktualisierungsregion für sich bewegende Bilder zu bestimmen.

3. Vorrichtung (100) nach Anspruch 1 oder 2, die ferner Folgendes umfasst:

   eine Prioritätsbestimmungseinheit (801), die dazu ausgelegt ist, für den Fall, dass eine Vielzahl von Aktualisierungsregionen vorhanden ist, eine Übertragungspriorität der Aktualisierungsregion zu bestimmen, wobei eine Aktualisierungsregion in einem aktiven Fenster eine hohe Priorität aufweist; und
   eine Übertragungszeitpunktbestimmungseinheit (802), die dazu ausgelegt ist, auf Basis der Übertragungspriorität, der Art von Daten, die übertragen werden, und der Netzwerkbandbreite einen Übertragungszeitpunkt der unterteilten Aktualisierungsregion zu bestimmen, wobei
   die Aktualisierungsregionsübertragungseinheit (111, 112, 113) dazu ausgelegt ist, die unterteilte Aktualisierungsregion zum bestimmten Übertragungszeitpunkt zu übertragen.

4. Informationsverarbeitungsverfahren zum Erzeugen eines Bildes zum Anzeigen von Ausführungsergebnissen eines Computers (100) auf einer Anzeigeeinheit einer Endgerätevorrichtung (120), die via ein Netzwerk verbunden ist, und Übertragen des Bildes zum Netzwerk, wobei das Verfahren Folgendes umfasst:

   Extrahieren einer Region, die als ein sich bewegendes Bild aktualisiert wird, von einem Bildschirm, der in einem Bildspeicher gespeichert ist, der einen Bildschirm enthält, auf dem ein Bild der Ausführungsergebnisse gezeichnet ist, als Aktualisierungsregion für sich bewegende Bilder;
   Bestimmen anhand von Informationen einschließlich einer Netzwerkbandbreite, eines vorab eingestellten Schwellenwertes der Übertragungszeit für die Übertragung, eines durchschnittlichen Komprimierungsverhältnisses eines Frames, der ohne Verwendung einer Interframe-Prädiktion codiert wurde, und eines durchschnittlichen Komprimierungsverhältnisses eines Frames, der unter Verwendung einer Interframe-Prädiktion codiert wurde, einer Anzahl von Unterteilungen der Aktualisierungsregion für sich bewegende Bilder, derart, dass sowohl ein I-Frame als auch ein P-Frame bei derselben Übertragung übertragen werden können, wobei die Übertragungszeit für die Übertragung kürzer ist als der Schwellenwert;

Unterteilen der Aktualisierungsregion, von der bestimmt wurde, dass sie die Region für sich bewegende Bilder in der bestimmten Anzahl von Unterteilungen ist; und

Übertragen von Daten über die unterteilte Aktualisierungsregion zur Endgerätevorrichtung (120).

5.  Informationsverarbeitungsprogramm, das, wenn es auf einem Computer ausgeführt wird, der über ein Netzwerk mit einer Endgerätevorrichtung (120) verbunden ist, den Computer (100) veranlasst:

eine Region, die als ein sich bewegendes Bild aktualisiert wird, von einem Bildschirm, der in einem Bildspeicher gespeichert ist, der einen Bildschirm enthält, auf dem ein Bild von Ausführungsergebnissen des Computers (100) gezeichnet ist, als Aktualisierungsregion für sich bewegende Bilder zu extrahieren, wobei der Computer dazu ausgelegt ist, ein Bild zum Anzeigen von Ausführungsergebnissen des Computers (100) auf einer Anzeigeeinheit der Endgerätevorrichtung, die via ein Netzwerk verbunden ist, zu erzeugen und das Bild zum Netzwerk zu übertragen;

anhand von Informationen einschließlich einer Netzwerkbandbreite, eines vorab eingestellten Schwellenwertes der Übertragungszeit für die Übertragung, eines durchschnittlichen Komprimierungsverhältnisses eines Frames, der ohne Verwendung einer Interframe-Prädiktion codiert wurde, und eines durchschnittlichen Komprimierungsverhältnisses eines Frames, der unter Verwendung einer Interframe-Prädiktion codiert wurde, eine Anzahl von Unterteilungen der Aktualisierungsregion für sich bewegende Bilder zu bestimmen, derart, dass sowohl ein 1-Frame als auch ein P-Frame bei derselben Übertragung übertragen werden können, wobei die Übertragungszeit für die Übertragung kürzer ist als der Schwellenwert;

die Aktualisierungsregion zu unterteilen, von der bestimmt wurde, dass sie die Region für sich bewegende Bilder in der bestimmten Anzahl von Unterteilungen ist; und

Daten über die unterteilte Aktualisierungsregion zur Endgerätevorrichtung (120) zu übertragen.

## Revendications

1.  Dispositif de traitement d'informations (100) configuré de manière à générer une image pour afficher des résultats d'exécution d'un ordinateur (100) sur une unité d'affichage (126) d'un dispositif terminal (120) connecté par l'intermédiaire d'un réseau, et à transmettre l'image au réseau, le dispositif de traitement d'informations (100) comportant :

une unité d'extraction de zone de mise à jour (105, 106) configurée de manière à extraire une zone, qui est mise à jour en tant qu'une image en mouvement, sous la forme d'une zone de mise à jour d'image en mouvement, d'un écran stocké dans une mémoire d'images qui contient un écran sur lequel une image des résultats d'exécution de l'ordinateur (100) est représentée ;

une unité de détermination d'état de division (110, 108, 109) configurée de manière à déterminer un nombre de divisions de la zone de mise à jour d'image en mouvement, de sorte que, tant une image intra, ou image « I », qu'une image prédite, ou image « P », peuvent être transmises dans la même transmission, à partir d'informations incluant une largeur de bande de réseau, une valeur de seuil du temps de transmission pour la transmission définie à l'avance, un taux de compression moyen d'une trame codée sans faire appel à une prédiction intertrame, et un taux de compression moyen d'une trame codée en faisant appel à la prédiction intertrame, dans lequel le temps de transmission pour la transmission est inférieur à la valeur de seuil ;

une unité de division de zone de mise à jour (107) configurée de manière à diviser la zone de mise à jour qui a été déterminée comme correspondant à la zone d'image en mouvement, en le nombre de divisions déterminé ; et

une unité de transmission de zone de mise à jour (111, 112, 113) configurée de manière à transmettre les données de zone de mise à jour divisée au dispositif terminal (120).

2.  Dispositif (100) selon la revendication 1, dans lequel
l'unité d'extraction de zone de mise à jour (105, 106) est en outre configurée de manière à extraire une zone qui est mise à jour en tant qu'une image fixe, en tant qu'une zone de mise à jour d'image fixe, de l'écran stocké dans la mémoire d'images ; et
l'unité de détermination d'état de division (110, 108, 109) est configurée de manière à déterminer un nombre de divisions de la zone de mise à jour d'image fixe, ainsi que le nombre de divisions de la zone de mise à jour d'image en mouvement.

3. Dispositif (100) selon la revendication 1 ou 2, comportant en outre :

une unité de détermination de priorité (801) configurée de manière à déterminer une priorité de transmission de la zone de mise à jour dans un cas où il existe une pluralité de zones de mise à jour, une zone de mise à jour au sein d'une fenêtre active présentant une priorité élevée ; et
une unité de détermination de temporisation de transmission (802) configurée de manière à déterminer une temporisation de transmission de la zone de mise à jour divisée, sur la base de la priorité de transmission, du genre de données transmises, et de la largeur de bande de réseau, dans lequel
l'unité de transmission de zone de mise à jour (111, 112, 113) est configurée de manière à transmettre la zone de mise à jour divisée à la temporisation de transmission déterminée.

4. Procédé de traitement d'informations pour générer une image afin d'afficher des résultats d'exécution d'un ordinateur (100) sur une unité d'affichage d'un dispositif terminal (120) connecté par l'intermédiaire d'un réseau, et pour transmettre l'image au réseau, le procédé comportant les étapes ci-dessous consistant à :

extraire une zone, qui est mise à jour en tant qu'une image en mouvement, sous la forme d'une zone de mise à jour d'image en mouvement, d'un écran stocké dans une mémoire d'images qui contient un écran sur lequel une image des résultats d'exécution est représentée ;
déterminer un nombre de divisions de la zone de mise à jour d'image en mouvement, de sorte que, tant une image intra, ou image « I », qu'une image prédite, ou image « P », peuvent être transmises dans la même transmission, à partir d'informations incluant une largeur de bande de réseau, une valeur de seuil du temps de transmission pour la transmission définie à l'avance, un taux de compression moyen d'une trame codée sans faire appel à une prédiction intertrame, et un taux de compression moyen d'une trame codée en faisant appel à la prédiction intertrame, dans lequel le temps de transmission pour la transmission est inférieur à la valeur de seuil ;
diviser la zone de mise à jour qui a été déterminée comme correspondant à la zone d'image en mouvement, en le nombre de divisions déterminé ; et
transmettre des données de zone de mise à jour divisée au dispositif terminal (120).

5. Programme de traitement d'informations, qui, lorsqu'il est exécuté sur un ordinateur connecté à un dispositif terminal (120) à travers un réseau, amène l'ordinateur (100) à :

extraire une zone, qui est mise à jour en tant qu'une image en mouvement, sous la forme d'une zone de mise à jour d'image en mouvement, d'un écran stocké dans une mémoire d'images qui contient un écran sur lequel une image des résultats d'exécution de l'ordinateur (100) est représentée, dans lequel l'ordinateur est configuré de manière à générer une image pour afficher des résultats d'exécution de l'ordinateur (100) sur une unité d'affichage du dispositif terminal connecté par l'intermédiaire d'un réseau, et à transmettre l'image au réseau ;
déterminer un nombre de divisions de la zone de mise à jour d'image en mouvement, de sorte que, tant une image intra, ou image « I », qu'une image prédite, ou image « P », peuvent être transmises dans la même transmission, à partir d'informations incluant une largeur de bande de réseau, une valeur de seuil du temps de transmission pour la transmission définie à l'avance, un taux de compression moyen d'une trame codée sans faire appel à une prédiction intertrame, et un taux de compression moyen d'une trame codée en faisant appel à la prédiction intertrame, dans lequel le temps de transmission pour la transmission est inférieur à la valeur de seuil ;
diviser la zone de mise à jour qui a été déterminée comme correspondant à la zone d'image en mouvement, en le nombre de divisions déterminé ; et
transmettre des données de zone de mise à jour divisée au dispositif terminal (120).

F I G. 1

FIG. 2A

203 MESH WHOSE UPDATING
FREQUENCY IS HIGH

202 MOVING IMAGE
PLAYBACK REGION

201 LOCUS OF
MOUSE CURSOR

FIG. 2B

204

205

202

FIG. 2C

204

HIGH FREQUENCY
SCREEN UPDATE
REGION

VIRTUAL DESKTOP SCREEN

100

S301 OPERATION INFORMATION

S302 SCREEN UPDATING

301

302a
302b
303c

S303 DIVIDED UPDATE REGION IS TRANSMITTED SEQUENTIALLY

120

303

120

F I G. 3

EP 2 914 009 B1

FIG4A

FIG4B

22

START

NO ── HAS OPERATION INFORMATION BEEN RECEIVED FROM CLIENT? ── S501

↓ YES

APPLICATION DRAWS IMAGE IN FRAME BUFFER ── S502

↓ S503

ACQUIRE SCREEN FROM FRAME BUFFER

↓

S504 ── HAS SCREEN UPDATING OCCURRED?

NO ←

↓ YES

CALCULATE TRANSFER RATE ── S505

↓ S506

ACQUIRE AMOUNT OF DATA THAT IS TRANSFERRED FROM UPDATE SIZE AND COMPRESSION RATIO

↓ S507

DETERMINE WHETHER OR NOT REGION SHOULD BE TURNED INTO MOVING IMAGE

↓

S508 ── IS REGION ONE HAVING BEEN TURNED INTO MOVING IMAGE?

YES ↓                          NO ↓

S510                          S509

MOVING IMAGE REGION PROCESSING          STILL IMAGE REGION PROCESSING

F I G. 5

START

ESTIMATE DATA SIZE WHEN I-FRAME IS TRANSMITTED FROM AVERAGE COMPRESSION RATIO OF I-FRAME — S601

ESTIMATE DATA SIZE WHEN P-FRAME IS TRANSMITTED FROM AVERAGE COMPRESSION RATIO OF P-FRAME — S602

DETERMINE NUMBER OF DIVISIONS AND DIVISION SIZE OF UPDATE REGION — S603

TRANSMIT DATA OF DIVIDED UPDATE REGION — S604

S605
IS TRANSMITTED DATA I-FRAME?
YES        NO

S606
ESTIMATE AVERAGE COMPRESSION RATIO OF I-FRAME

S607
ESTIMATE AVERAGE COMPRESSION RATIO OF P-FRAME

END

F I G. 6

701

F I G. 7 A

701 UPDATE REGION
OF MOVING IMAGE

702a

702b

702c

I : I-frame    P : P-frame

TRANSMISSION TIME

F I G. 7 B

FIG. 8

|  | ORDER OF PRIORITY | ACTIVE WINDOW | MOVING IMAGE | | STILL IMAGE | TRANSMISSION TIMING |
|---|---|---|---|---|---|---|
|  |  |  | I-FRAME | OTHER THAN I-FRAME |  |  |
| HIGH | 1 | O | O |  |  | TRANSMISSION IS PERFORMED AT EACH TRANSMISSION TIMING |
|  | 2 | O |  | O |  | TRANSMISSION IS PERFORMED AT EACH TRANSMISSION TIMING |
|  | 2 | O |  |  | O | TRANSMISSION IS PERFORMED AT TIMING AT WHICH I-FRAME WHOSE ORDER OF PRIORITY IS 1 IS NOT BEING TRANSMITTED |
|  | 3 |  | O |  |  | TRANSMISSION IS PERFORMED AT TIMING AT WHICH I-FRAME WHOSE ORDER OF PRIORITY IS 1 IS NOT BEING TRANSMITTED |
| LOW | 4 |  |  | O |  | TRANSMISSION IS PERFORMED m TIMES OUT OF n TIMES AT TIMING AT WHICH I-FRAME IS NOT BEING TRANSMITTED (m < n) |
|  | 4 |  |  |  | O | TRANSMISSION IS PERFORMED m TIMES OUT OF n TIMES AT TIMING AT WHICH I-FRAME IS NOT BEING TRANSMITTED |

F I G. 9

27

START S1001

IS UPDATE REGION
WITHIN ACTIVE WINDOW? — YES

NO — S1002

IS UPDATE REGION
MOVING IMAGE? — YES

NO — S1006

IS UPDATE REGION
MOVING IMAGE? — YES

NO — S1003

IS UPDATE
REGION I-FRAME?

NO — S1007

IS UPDATE
REGION I-FRAME? — YES

NO — S1008
SET "3" TO ORDER
OF PRIORITY

YES — S1009
SET "4" TO ORDER
OF PRIORITY

NO — S1005
SET "2" TO ORDER
OF PRIORITY

YES — S1004
SET "1" TO ORDER
OF PRIORITY

END

F I G. 1 0

START

S1101

HAS MOVING IMAGE UPDATE REGION BEEN DETECTED? — NO → (A)

↓ YES

S1102

HAS UPDATE REGION WHOSE TRANSMISSION PRIORITY IS HIGH BEEN DETECTED? — NO → (B)

↓ YES

S1103

IS NEW MOVING IMAGE UPDATE REGION TRANSMITTED AT THE SAME TIME AS I-FRAME OF ALREADY-EXISTING MOVING IMAGE UPDATE REGION? — YES

↓ NO

S1106
DETERMINE NUMBER OF DIVISIONS OF NEW MOVING IMAGE UPDATE REGION

S1104
DETERMINE NUMBER OF DIVISIONS OF NEW MOVING IMAGE UPDATE REGION

S1107
SET "CHANGE OF NUMBER OF DIVISIONS" FLAG TO ALREADY-EXISTING MOVING IMAGE UPDATE REGION

S1105
SET AGAIN NUMBER OF DIVISIONS OF ALREADY-EXISTING MOVING IMAGE UPDATE REGION

→ (C)

F I G. 1 1 A

B

IS TIMING ONE AT WHICH P
FRAME OF MOVING IMAGE UPDATE
REGION WHOSE TRANSMISSION PRIORITY
IS HIGH IS TRANSMITTED?    S1111

NO

YES

IS THERE NO UPDATE REGION WHOSE
TRANSMISSION PRIORITY IS HIGH?

NO

S1112

YES

DETERMINE NUMBER OF
DIVISIONS OF NEW MOVING
IMAGE UPDATE REGION

S1105

C

S1116

DETERMINE NUMBER OF
DIVISIONS OF NEW STILL
IMAGE UPDATE REGION

END

A

HAS STILL IMAGE UPDATE
REGION WHOSE TRANSMISSION PRIORITY
IS HIGH BEEN DETECTED?    S1108

NO

YES

IS TIMING ONE AT WHICH P
FRAME OF MOVING IMAGE UPDATE
REGION WHOSE TRANSMISSION PRIORITY
IS HIGH IS TRANSMITTED?

NO

S1109

YES

DETERMINE NUMBER OF
DIVISIONS OF NEW STILL
IMAGE UPDATE REGION    S1110

S1114

IS TIMING ONE AT WHICH P
FRAME OF MOVING IMAGE UPDATE
REGION IS TRANSMITTED?

NO

YES

S1115

DETERMINE NUMBER OF
DIVISIONS OF NEW STILL
IMAGE UPDATE REGION

F I G. 1 1 B

START

HAS OPERATION INFORMATION
BEEN RECEIVED FROM CLIENT? ⟩ S501

NO

YES

APPLICATION DRAWS IMAGE IN
FRAME BUFFER ⟩ S502

ACQUIRE SCREEN FROM FRAME BUFFER ⟩ S503

S1201

HAS SCREEN
UPDATING OCCURRED?

NO

YES

CALCULATE TRANSFER RATE

S505

ACQUIRE AMOUNT OF DATA THAT IS
TRANSFERRED FROM UPDATE SIZE AND
COMPRESSION RATIO ⟩ S506

DETERMINE WHETHER OR NOT REGION
SHOULD BE TURNED INTO MOVING IMAGE ⟩ S507

S508

IS REGION ONE
HAVING BEEN TURNED INTO
MOVING IMAGE?

YES

NO

S1202

MOVING IMAGE REGION
PROCESSING

S1203

STILL IMAGE REGION
PROCESSING

NO

IS THERE ANOTHER
UPDATE REGION? ⟩ S1204

YES

F I G. 1 2

START

TRANSMISSION PRIORITY AND
TRANSMISSION TIMING ARE
SET
S1301

HAS NETWORK BAND
CHANGED?
S1302
YES

NO

HAS NUMBER OF MOVING IMAGE
UPDATE REGIONS CHANGED?
S1303
YES

NO

IS "CHANGE OF NUMBER OF
DIVISION" FLAG SET?
S1304
YES

NO

DIVIDE UPDATE REGION
S1310

TRANSMIT DATA OF DIVIDED UPDATE
REGION THAT IS TRANSMITTED AT
CURRENT TIMING
S1311

IS CURRENT TIMING ONE AT
WHICH MOVING IMAGE UPDATE
REGION IS TRANSMITTED?
S1305
NO

YES

IS CURRENT TIMING ONE
AT WHICH I-FRAME OF MOVING
IMAGE UPDATE REGION IS
TRANSMITTED?
S1306
NO

YES

RESET "CHANGE OF NUMBER OF
DIVISIONS" FLAG
S1307

SET AGAIN NUMBER OF DIVISIONS
OF UPDATE REGION
S1308

SET "CHANGE OF NUMBER OF
DIVISION" FLAG
S1309

IS TRANSMITTED DATA
I-FRAME?
S1312
YES        NO

ESTIMATE AVERAGE
COMPRESSION RATIO OF
I-FRAME
S1313

ESTIMATE AVERAGE
COMPRESSION RATIO OF
P-FRAME
S1314

END

F I G. 1 3

```
                    ┌──────────────┐
                    │    START     │
                    └──────────────┘                    S1401
                           │
                           ▼
        ┌─────────────────────────────────────┐
        │           TRANSMISSION              │
        │            PRIORITY AND             │
        │      TRANSMISSION TIMING            │
        │             ARE SET                 │
        └─────────────────────────────────────┘
                           │
                           │                        S1402
                           ▼
              ╱────────────────────────╲    YES
             ╱      HAS NETWORK          ╲──────────┐
             ╲   BANDWIDTH CHANGED?      ╱          │       S1403
              ╲────────────────────────╱           │
                         │                          ▼
                         NO             ┌──────────────────────────┐
                                        │  SET "CHANGE OF NUMBER   │
                                        │    OF DIVISION" FLAG     │
                                        └──────────────────────────┘
                         │                          │
                         ◄──────────────────────────┘
                         │                    S1404
                         ▼
        ┌─────────────────────────────────────┐
        │        DIVIDE UPDATE REGION         │
        └─────────────────────────────────────┘
                         │
                         ▼
        ┌─────────────────────────────────────┐   S1405
        │  TRANSMIT DATA OF DIVIDED           │
        │  UPDATE REGION THAT IS              │
        │  TRANSMITED AT CURRENT              │
        │            TIMING                   │
        └─────────────────────────────────────┘
                         │
                         ▼
                    ┌──────────────┐
                    │     END      │
                    └──────────────┘
```

F I G.   1 4

1501 VIRTUAL DESKTOP SCREEN

1502

F I G. 1 5 A

VIRTUAL DESKTOP SCREEN

S : STILL IMAGE

1503a
1503b
1503c
1504a
1504b
1504c

F I G. 1 5 B

VIRTUAL DESKTOP SCREEN

1601

1602

1603

F I G. 1 6 A

1601

1603

1602

F I G. 1 6 B

F I G. 1 7

F I G. 1 8

F I G . 1 9

F I G. 2 0

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011238014 A